Europäisches Patentamt

European Patent Office

Office européen des brevets

(11) Veröffentlichungsnummer: **0 291 650**
**B1**

# EUROPÄISCHE PATENTSCHRIFT

(45) Veröffentlichungstag der Patentschrift:
07.02.90

(51) Int. Cl.⁴: **B62D 35/02**

(21) Anmeldenummer: 88103571.1

(22) Anmeldetag: 08.03.88

(54) Aerodynamisch ausgebildetes Verkleidungsteil für die Unterseite eines Kraftfahrzeuges.

(30) Priorität: 19.05.87 DE 3716701

(43) Veröffentlichungstag der Anmeldung:
23.11.88 Patentblatt 88/47

(45) Bekanntmachung des Hinweises auf die Patenterteilung:
07.02.90 Patentblatt 90/6

(84) Benannte Vertragsstaaten:
DE FR GB IT

(56) Entgegenhaltungen:
DE-A- 3 320 987
DE-B- 1 286 917

(73) Patentinhaber: Dr.Ing.h.c. F. Porsche
Aktiengesellschaft, Porschestrasse 42,
D-7000 Stuttgart 40(DE)

(72) Erfinder: Preiss, Michael, Dipl.-Ing., Hinter der
Muehle 10, D-7143 Vaihingen-Aurich(DE)

ACTORUM AG

**Beschreibung**

Die Erfindung bezieht sich auf ein aerodynamisch ausgebildetes Verkleidungsteil für die Unterseite eines Kraftfahrzeuges, insbesondere Personenwagens, wobei am Verkleidungsteil wenigstens eine Eintrittsöffnung für die zwischen Verkleidungsteil und Fahrbahn hindurchströmende Kühlluft vorgesehen ist.

Ein bekanntes Verkleidungsteil der eingangs genannten Gattung (DE-AS 12 86 917) ist ohne Zwischenschaltung eines Halteelementes am darüberliegenden Bodenblech befestigt, wobei sich in Fahrzeuglängsrichtung erstreckende, sickenförmige Einprägungen des Verkleidungsteiles unmittelbar am Bodenblech abstützen. Ferner sind am Verkleidungsteil mehrere, hintereinanderliegende schlitzförmige Öffnungen zur Belüftung eines darüberliegenden Motorraumes angeordnet.

Dieser Anordnung haftet der Nachteil an, daß das Verkleidungsteil wegen der Einprägungen nur bereichsweise glattflächig ausgebildet ist und daß ferner zwischen den Eintrittsöffnungen des Verkleidungsteiles und angrenzenden Aggregaten und/oder Fahrwerksteilen keinerlei Maßnahmen getroffen worden sind, um eine gute Kühlung dieser Aggregate und/oder Fahrwerksteile zu erzielen.

Aufgabe der Erfindung ist es, an einem Verkleidungsteil für die Unterseite eines Kraftfahrzeuges solche Maßnahmen zu treffen, daß bei reduziertem Luftwiderstand des Kraftfahrzeuges die oberhalb des Verkleidungsteiles liegenden Aggregate und/oder Fahrwerksteile ausreichend gekühlt werden.

Erfindungsgemäß wird dies durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die spezielle Anordnung und Ausbildung der Halteelemente einerseits eine sichere Befestigung des Verkleidungsteiles und andererseits eine verbesserte Kühlung der benachbart der Eintrittsöffnung liegenden Aggregate und/oder Fahrwerksteile geschaffen wird. Die schaufelförmigen Halteelemente sind einfach und kostengünstig herstellbar und leicht montierbar. Durch die trichterförmige Anordnung des zwischen den Halteelementen gebildeten Kanals werden das Getriebedifferential, das Ausgleichsgelenk und die Achswellen von einem definierten Kühlluftstrom beaufschlagt. Das Ansteigen des Verkleidungsteiles nach oben hin vor der Eintrittsöffnung sichert ein wirkungsvolles Hochführen der Kühlluft nach der Eintrittsöffnung.

Ein Ausführungsbeispiel der Erfindung ist in der Zeichnung dargestellt und wird im folgenden näher erläutert. Es zeigt

Fig. 1 eine Teilseitenansicht eines Personenwagens mit dem erfindungsgemäßen Halteelement, teilweise im Schnitt,

Fig. 2 eine Teilansicht von oben auf den Personenwagen mit dem Halteelement für das Verkleidungsteil.

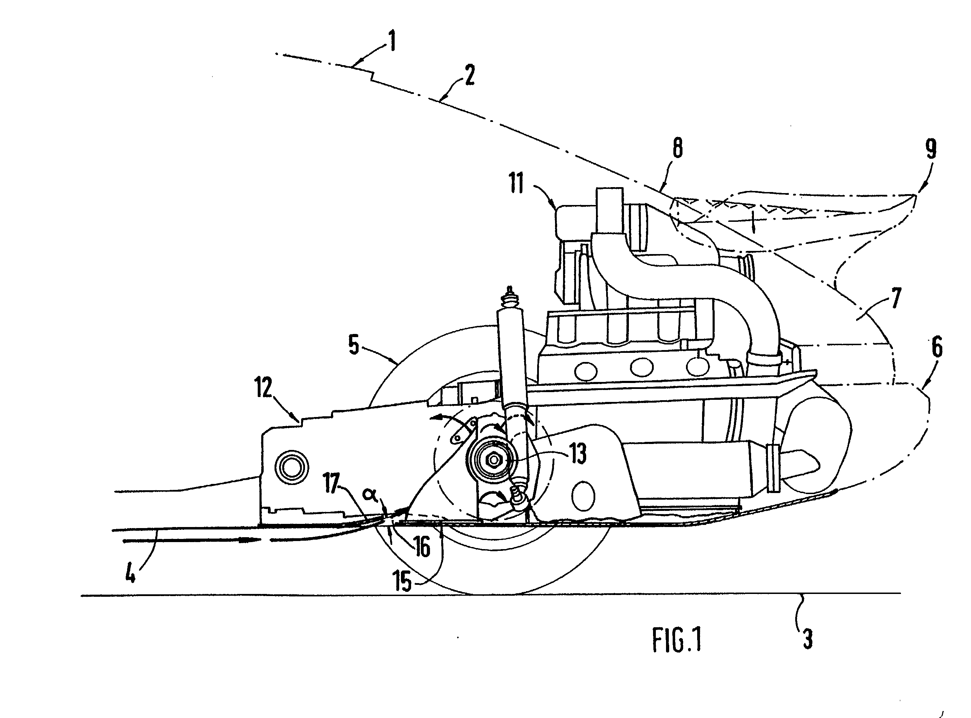

Der in Fig. 1 dargestellte Heckbereich eines Personenwagens 1 umfaßt einen Aufbau 2, dessen benachbart einer Fahrbahn 3 verlaufende Unterseite mit einem aerodynamisch ausgebildeten Verkleidungsteil 4 versehen ist. Der von Rädern 5 getragene Aufbau 2 setzt sich im Heckbereich aus einem Stoßfänger 6, Seitenteilen 7 und einer schwenkbaren Klappe 8 zusammen, an deren Oberseite eine Luftleitvorrichtung 9 (Heckspoiler) angeordnet ist. Ferner ist im Heckbereich hinter einer Hinterachse 10 eine Brennkraftmaschine 11 angeordnet, an die ein Getriebe 12 angeflanscht ist. Über beiderseits des Getriebes 12 angeordnete Ausgleichsgelenke 13 und daran anschließende Achswellen 14 werden die beiden Hinterräder des Personenwagens 1 angetrieben. Im Bereich der Brennkraftmaschine wird das Verkleidungsteil 4 durch einen Motorunterschutz gebildet.

Das aus Kunststoff oder Leichtmetall (Aluminium) hergestellte Verkleidungsteil 4 ist zur Fahrbahn 3 hin vollständig glattflächig ausgebildet und bedeckt vorzugsweise die gesamte Fahrzeugunterseite, wodurch eine wesentliche Verbesserung des Luftwiderstandsbeiwertes erzielt wird. Das Verkleidungsteil 4 kann dabei einstückig oder mehrteilig ausgebildet sein. Die Befestigung des Verkleidungsteiles 4 erfolgt vorzugsweise randseitig am angrenzenden Aufbau 2 durch Schrauben, Klipsen oder dergleichen. Ferner sind zur Fixierung des Verkleidungsteiles 4 örtlich Halteelemente 15 vorgesehen, die einerseits mit dem Verkleidungsteil 4 und andererseits mit darüberliegenden Aufbau-, Motor-, Getriebe- oder Fahrwerksteilen verbunden sind.

Damit bei einer vollständigen Unterbodenverkleidung bestimmte, oberhalb des Verkleidungsteiles 4 liegende Aggregate und/oder Fahrwerksteile eine ausreichende Kühlung erfahren, ist am Verkleidungsteil 4 zumindest eine Eintrittsöffnung 16 vorgesehen, durch die ein Teil der zwischen der Fahrbahn 3 und dem Verkleidungsteil 4 hindurchgeführten Kühlluft abgezweigt wird. Gemäß Fig. 1 ist das Verkleidungsteil 4 vor der Eintrittsöffnung 16 mit einem hochgezogenen Abschnitt 17 versehen, wobei durch den gewählten geringen Steigungswinkel α des Abschnitts 17 eine anliegende Strömung in diesem Bereich erzielt wird. Erfindungsgemäß sind die benachbart der Eintrittsöffnung 16 angeordneten Halteelemente 15 derart ausgebildet, daß die eintretende Kühlluft gezielt auf angrenzende Aggregate und/oder Fahrwerksteile geleitet wird. Im Ausführungsbeispiel werden ein Getriebe 12 (mit einem Getriebedifferential), die Ausgleichsgelenke 13 und die Achswellen 14 von der Kühlluft umströmt.

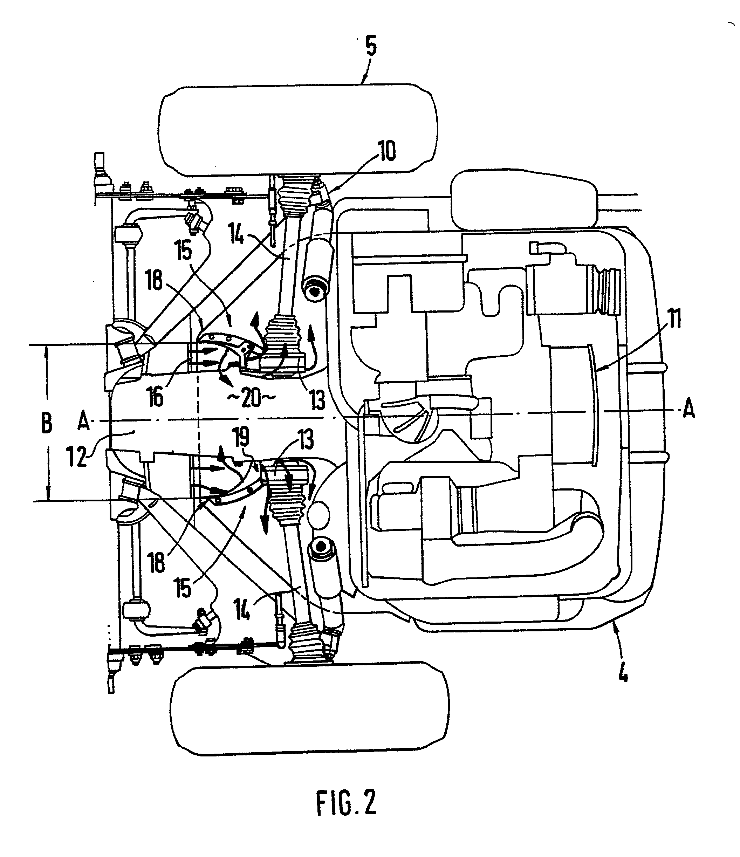

Entsprechend Fig. 2 sind die Halteelemente 15 in der Draufsicht gesehen, schaufelförmig ausgebildet, dergestalt, daß ein vorderer Endbereich 18 einen größeren Abstand zur Mittellängsebene A-A aufweist als ein hintenliegender Endbereich 19. In einem dazwischenliegenden Bereich weist das Halteelement 15 einen konkaven Formverlauf auf.

Eine besonders vorteilhafte Kühlluftführung wird dadurch erzielt, daß beiderseits der Mittellängsebene A-A je ein Halteelement 15 angeordnet ist, wobei durch diese paarweise Anordnung der Halteelemente 15 ein dazwischen liegender Kanal 20 definiert ist, der sich zu den zu kühlenden Aggregaten und/oder Fahrwerksteilen hin kontinuierlich verjüngt. Die Halteelemente 15 sind gemäß Fig. 2 mittels lösbarer Befestigungselemente (Schrauben, Klipse oder dergleichen) einerseits am Verkleidungsteil 4 und andererseits am darüberliegenden Getriebegehäuse befestigt.

In der Seitenansicht gesehen weist das Halteelement 15 etwa die Form eines rechtwinkeligen Dreieckes auf, dessen etwa horizontal ausgerichtete Seite mit der Innenseite des Verkleidungsteiles verbunden ist und dessen hintenliegende, aufrechte Seite benachbart dem Ausgleichsgelenk 13 verläuft. Die dritte Seite steigt entgegen der Fahrtrichtung schräg nach oben hin an.

Durch die Form und die relativ große Längserstreckung der Halteelemente 15 wird erreicht, daß der Kühlluftstrom so lange wie möglich am Getriebegehäuse entlangstreicht und dieses kühlt. Außerdem wird durch die Halteelemente 15 ein Abschottungseffekt zum Radhaus hin bewirkt. Sonst würde der mühsam abgezweigte Kühlluftstrom ohne Kühlungswirkung auf die Aggregate direkt in das Radhaus abziehen, weil dort ein Unterdruck herrscht.

Die in Fahrtrichtung gesehen unmittelbar vor dem Halteelement 15 liegende Eintrittsöffnung 16 weist eine Breite auf, die gleich oder kleiner ist als der Abstand B der beiden Halteelemente 15 an ihren vorderen Endbereichen 18. Durch die relativ große Höhenerstreckung der Halteelemente 15 und die leichte Anstellung des Verkleidungsteiles 4 vor der Eintrittsöffnung 16 wird die Kühlluft wirkungsvoll nach oben geführt und kühlt somit auch diese Bereiche ausreichend.

## Patentansprüche

1. Aerodynamisch ausgebildetes Verkleidungsteil (4) für die Unterseite eines Kraftfahrzeuges, insbesondere Personenwagens, wobei am Verkleidungsteil wenigstens eine Eintrittsöffnung (16) für die zwischen dem Verkleidungsteil und der Fahrbahn hindurchströmende Kühlluft vorgesehen ist, dadurch gekennzeichnet, daß am Verkleidungsteil (4) benachbart der Eintrittsöffnung (16) zumindest ein Halteelement (15) zum Festlegen des Verkleidungsteiles (4) angeordnet und derart ausgebildet ist, daß mittels des Halteelementes (15) die durch die Eintrittsöffnung (16) eintretende Kühlluft gezielt auf angrenzende Aggregate und/oder Fahrwerksteile geleitet wird.

2. Verkleidungsteil nach Anspruch 1, dadurch gekennzeichnet, daß das Halteelement (15) in der Draufsicht gesehen - schaufelförmig ausgebildet ist.

3. Verkleidungsteil nach den Ansprüchen 1 und 2, dadurch gekennzeichnet, daß beiderseits einer Mittellängsebene (A-A) je ein Halteelement (15) angeordnet ist, wobei durch die beiden Halteelemente (15) ein dazwischenliegender Kanal (20) definiert ist, der sich entgegen der Fahrtrichtung kontinuierlich verjüngt.

4. Verkleidungsteil nach Anspruch 1, dadurch gekennzeichnet, daß jedes Halteelement (5) einerseits am Verkleidungsteil (4) und andererseits an einem mit Abstand zum Verkleidungsteil (4) verlaufenden Aufbau-, Motor-, Getriebe- oder Fahrwerksteil befestigt ist.

5. Verkleidungsteil nach Anspruch 1, dadurch gekennzeichnet, daß mittels der Halteelemente (15) die Kühlluft zu einem Getriebe (12), einem Ausgleichsgelenk (13) und einer Achswelle (14) geleitet wird.

6. Verkleidungsteil nach Anspruch 1, dadurch gekennzeichnet, daß die Breite der Eintrittsöffnung (16) gleich oder kleiner ist als der Abstand (B) der beiden Halteelemente (15) an deren vorneliegenden Endbereichen (18).

7. Verkleidungsteil nach Anspruch 1, dadurch gekennzeichnet, daß die Halteelemente (15) - in Seitenansicht gesehen - etwa die Form eines rechtwinkeligen Dreiecks aufweisen.

8. Verkleidungsteil nach Anspruch 1, dadurch gekennzeichnet, daß das Verkleidungsteil (4) örtlich durch einen Motorunterschutz gebildet wird.

9. Verkleidungsteil nach Anspruch 1, dadurch gekennzeichnet, daß das Verkleidungsteil (4) vor der Eintrittsöffnung (16) unter einem geringen Steigungswinkel (α) nach oben hin ansteigt.

## Revendications

1. A partie de revêtement (4) de forme aérodynamique pour la surface inférieure d'une automobile, en particulier d'une voiture particulière, une ouverture d'entrée (16) étant au moins prévue dans la partie de revêtement pour l'air de refroidissement circulant entre la partie de revêtement et la piste de roulement, caractérisée en ce qu'au moins un élément de maintien (15) servant à fixer la partie de revêtement (4) est disposé dans la partie de revêtement à côté de l'ouverture d'entrée (16), et de façon qu'à l'aide de l'élément de maintien (15), l'air de refroidissement entrant par l'ouverture d'entrée (16) est conduit à dessin sur des agrégats et/ou les parties de train de roulement limitrophes.

2. Partie de revêtement selon la revendication 1, caractérisée en ce que l'élément de maintien (15), vu de dessus, est en forme d'ailette.

3. Partie de revêtement selon les revendications 1 ou 2, caractérisée en ce qu'un élément de maintien (15) est disposé sur chacun des deux côtés d'un plan longitudinal médian (A–A), un canal intermédiaire (20), qui se rétrécit continuellement dans le sens contraire au sens de déplacement, étant défini par les deux éléments de maintien (15).

4. Partie de revêtement selon la revendication 1, caractérisée en ce que chaque élément de maintien (15) est fixée d'une part sur la partie de revêtement (4) et d'autre part sur une partie de carrosserie, de moteur, de boite de vitesse ou de train de roulement s'étendant à distance de la partie de revêtement (4).

5. Partie de revêtement selon la revendication 1, caractérisée en ce que l'air de refroidissement destiné à une boîte de vitesses (12), à une articulation de compensation (13) et à un arbre d'essieu (14), est conduit à l'aide de l'élément de maintien (15).

6. Partie de revêtement selon la revendication 1, caractérisée en ce que la largeur de l'ouverture d'entrée (16) est identique ou inférieure à la distance (B) entre les deux éléments de maintien (15), sur leur zone d'extrémité avant (18).

7. Partie de revêtement selon la revendication 1, caractérisée en ce que les éléments de maintien (15) présentent, en vue de côté, à peu près la forme d'un triangle rectangle.

8. Partie de revêtement selon la revendication 1, caractérisée en ce que la partie de revêtement (4) est formée localement par une protection inférieure de moteur.

9. Partie de revêtement selon la revendication 1, caractérisée en ce que la partie de revêtement (4) monte vers le haut, devant l'ouverture d'entrée (16), avec un faible angle de pente ($\alpha$).

**Claims**

1. An aerodynamically shaped fairing part (4) for the underside of a motor vehicle, in particular a passenger car, wherein at least one inlet opening (16) is provided in the fairing part for the cooling air which flows through between the fairing part and the roadway, characterized in that at least one retaining member (15) for securing the fairing part (4) is mounted on the fairing part (4) adjacent the inlet opening (16) and is constructed in such a way that by means of the holding element (15) the cooling air entering through the inlet opening (16) is guided in a deliberate manner to adjacent units and/or chassis parts.

2. A fairing part according to Claim 1, characterized in that the retaining member (15) is constructed – as seen in plan view – in the manner of a scoop.

3. A fairing part according to Claims 1 and 2, characterized in that a retaining member (15) is arranged on each side of a median longitudinal plane (A–A), an interposed channel (20), which tapers inwardly continuously opposite to the direction of travel, being defined by the two retaining members (15).

4. A fairing part according to Claim 1, characterized in that each retaining member (15) is secured at one side to the fairing part (4) and at the other side to a part of the bodywork, engine, transmission or chassis extending at a distance from the fairing part (4).

5. A fairing part according to Claim 1, characterized in that the cooling air is guided by means of the retaining members (15) to a transmission (12), a differential joint (13) and an axle shaft (14).

6. A fairing part according to Claim 1, characterized in that the width of the inlet opening (16) is greater or less than the distance (B) of the two retaining members (15) on the front end regions (18) thereof.

7. A fairing part according to Claim 1, characterized in that the retaining members (15) have – as viewed in a lateral elevation – approximately the shape of a right-angled triangle.

8. A fairing part according to Claim 1, characterized in that the fairing part (4) is formed locally by a bottom apron plate.

9. A fairing part according to Claim 1, characterized in that the fairing part (4) rises upwards in front of the inlet opening (16) at a slight angle of inclination ($\alpha$).

FIG.1

EP 0 291 650 B1

FIG.2